(19) **Europäisches Patentamt / European Patent Office / Office européen des brevets**

(11) **EP 3 488 411 B1**

(12) **FASCICULE DE BREVET EUROPEEN**

(45) Date de publication et mention de la délivrance du brevet:
**13.09.2023 Bulletin 2023/37**

(21) Numéro de dépôt: **17754735.3**

(22) Date de dépôt: **21.07.2017**

(51) Classification Internationale des Brevets (IPC):
**G06T 5/00** *(2006.01)*    **B23K 26/00** *(2014.01)*
**B42D 25/00** *(2014.01)*    **B41M 3/14** *(2006.01)*
**B41M 5/24** *(2006.01)*    **B42D 25/41** *(2014.01)*

(52) Classification Coopérative des Brevets (CPC):
**B41M 3/14; B41M 5/24; B42D 25/00; B42D 25/41; G06T 5/008**

(86) Numéro de dépôt international:
**PCT/FR2017/052004**

(87) Numéro de publication internationale:
**WO 2018/015685 (25.01.2018 Gazette 2018/04)**

(54) **AMELIORATION D'UNE IMAGE EN PROFONDEUR SUJETTE A UN EFFET D'OMBRAGE**

VERBESSERUNG EINES TIEFENBILDES MIT EINEM SCHATTENEFFEKT

IMPROVING A DEPTH IMAGE SUBJECT TO A SHADOW EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2016 FR 1657064**

(43) Date de publication de la demande:
**29.05.2019 Bulletin 2019/22**

(73) Titulaire: **IDEMIA France**
**92400 Courbevoie (FR)**

(72) Inventeurs:
• **VANDROUX, Coralie**
**92700 Colombes (FR)**
• **BERTHE, Benoît**
**92700 Colombes (FR)**

(74) Mandataire: **Idemia**
**2, place Samuel de Champlain**
**92400 Courbevoie (FR)**

(56) Documents cités:
• **XINWEI CHEN ET AL: "3D printing robot: model optimization and image compensation", JOURNAL OF CONTROL THEORY AND APPLICATIONS, SOUTH CHINA UNIVERSITY OF TECHNOLOGY AND ACADEMY OF MATHEMATICS AND SYSTEMS SCIENCE, CAS, HEIDELBERG, vol. 10, no. 3, 1 juillet 2012 (2012-07-01), pages 273-279, XP035079419, ISSN: 1993-0623, DOI: 10.1007/S11768-012-1122-7**
• **MATHIEU HÉBERT ET AL: "Extending the Clapper-Yule model to rough printing supports", JOURNAL OF THE OPTICAL SOCIETY OF AMERICA A, vol. 22, no. 9, 1 septembre 2005 (2005-09-01), page 1952, XP055352642, US ISSN: 1084-7529, DOI: 10.1364/JOSAA.22.001952**
• **Aurélie Montmerle Bonnefois: "Etude théorique et expérimentale d'un laser à solide de forte puissance moyenne, déclenché à haute-cadence et possédant une bonne qualité de faisceau", , 10 mai 2006 (2006-05-10), pages 1-177, XP055419493, Extrait de l'Internet: URL:http://www.iaea.org/inis/collection/NC LCollectionStore/_Public/41/021/41021830.p df [extrait le 2017-10-26]**

**EP 3 488 411 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Arrière-plan de l'invention

La présente invention concerne un procédé de production d'image et plus particulièrement une amélioration d'un tel procédé dans le cas où ce procédé de production d'image produit une image présentant une épaisseur telle que se produise un effet d'ombrage.

Certains procédés de production d'image produisent une image présentant une épaisseur. Quel que soit son mode de production, lorsqu'une image est observée, ceci s'effectue, le plus souvent, sous illumination multidirectionnelle. Dans le cas d'une image définie en épaisseur ceci a pour effet préjudiciable que chaque élément d'image projette une ombre, fonction de l'opacité de l'élément, sur les éléments d'image voisins. L'étendue du voisinage ainsi affecté est fonction de l'épaisseur des éléments d'image.

Un tel effet d'ombrage modifie l'image effectivement réalisée relativement à une image objective souhaitée, en ce que l'image effectivement réalisée est plus sombre et plus floue que l'image objective.

Il peut être noté que ce phénomène d'ombrage préjudiciable n'existe pas pour une image imprimée de manière classique. En effet la profondeur/épaisseur de l'encre d'impression est suffisamment négligeable par rapport aux dimensions transverses d'un élément d'image pour qu'un ombrage puisse se produire, ou du moins soit perceptible.

Par ailleurs, la diffusion du laser dans le matériau formant le substrat pour une impression au laser peut également causer des effets préjudiciables qui sont décrits ci-après, et qu'il est souhaitable de corriger lors de l'impression d'une image au laser.

Le document intitulé "3D printing robot: model optimization and image compensation" (XINWEI CHEN et al, 1 juillet 2012) décrit un robot à 7 axes pour des applications de larges impressions 3D basé sur un modèle d'optimisation et sur une compensation d'image.

Objet et résumé de l'invention

L'invention est définie dans le jeu de revendications ci-joint.

La présente invention remédie à cet inconvénient. Le principe de l'invention consiste à améliorer la consigne de production fournie au procédé de production d'image de telle manière à ce que l'image produite sur la base de cette consigne de production améliorée soit la plus proche possible de l'image objective que l'on souhaite et que les conséquences de l'effet d'ombrage soient les plus réduites possibles ou encore pour corriger les effets de la dynamique, des distorsions liées à la diffusion du laser dans le matériau constituant le substrat recevant l'impression.

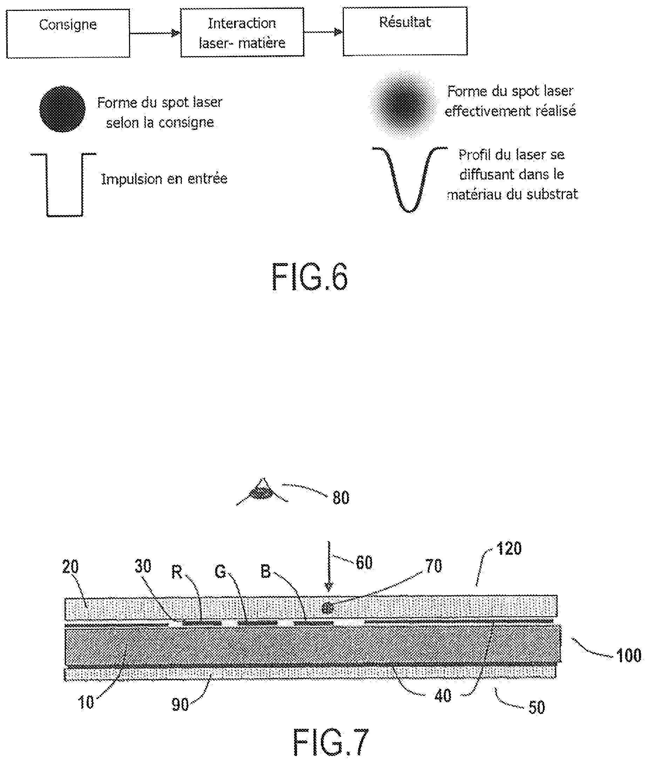

Comme représenté en figure 6, le laser lorsqu'il réagit avec la matière est soumis à un effet de diffusion et répond avec sa propre dynamique. En effet, comme tout système, il ne sait pas répondre parfaitement à une impulsion, on constate alors une réponse moins franche et plus diffuse. De plus, les particules constituant le substrat qui sont brûlées se diffusent. Ces effets de diffusion du laser dans le matériau du substrat sont susceptibles de modifier ou dégrader l'image effectivement réalisée par rapport à une image objective que l'on souhaite obtenir par impression au laser. Ces phénomènes, appelés généralement effets de diffusion résultant de l'interaction laser- matière dans le matériau du substrat, sont bien connus de l'homme du métier et ne seront donc pas d'avantage décrits dans ce document. Il est ainsi souhaitable de corriger ces effets de diffusion du laser dans la matière résultant de l'interaction entre le laser et la matière, en adaptant la consigne de production en conséquence comme expliqué ci-après.
Pour cela l'invention modélise le dispositif de production d'image et son effet d'ombrage par une fonction de transfert fournissant une image prédite lorsque le dispositif de production d'image est appliqué à une consigne de production. Cette fonction est ensuite « inversée » pour déterminer une consigne de production améliorée optimale telle que le dispositif de production d'image appliqué à cette consigne de production améliorée produise une image réalisée la plus proche possible de l'image objective.
L'invention a pour objet un procédé de traitement destiné à permettre la production d'une image, dite image finale, comportant une juxtaposition d'éléments d'image dans un substrat présentant une épaisseur et produisant une image en épaisseur telle que se produise un effet d'ombrage de chaque élément d'image sur ses éléments d'image voisins,

ledit procédé comprenant une étape de détermination, à partir d'une image objective, d'une consigne de production S apte à être utilisée par un dispositif de production d'image pour produire ladite image finale;
dans lequel l'étape de détermination comprend les étapes suivantes :

- modélisation du dispositif de production d'image par une fonction de transfert F transformant une consigne de production S en une image prédite correspondante, et
- détermination, par inversion d'au moins une partie de la fonction de transfert F, d'une consigne de production améliorée SA pouvant être utilisée en tant que consigne de production S par le dispositif de production pour produire ladite image finale, de sorte à corriger au moins en partie l'effet d'ombrage dans l'image finale et, éventuellement, pour corriger aussi au moins en partie l'effet de diffusion du laser résultant de l'interaction laser-matière dans un substrat, dans lequel ladite étape de détermination comprend un calcul itératif automatique minimisant une distance colorimétrique entre l'image objective (10) et une image prédite (IP) par la fonction de transfert F appliquée à une consigne de production S.

Le procédé de traitement de l'invention est par exemple mis en œuvre par un dispositif de traitement.

Selon un mode de réalisation particulier, lors de l'étape de détermination, la consigne de production améliorée SA est choisie pour que l'image prédite correspondante soit la plus proche possible de l'image objective afin de minimiser l'effet d'ombrage dans l'image finale.

Selon un mode de réalisation particulier, l'épaisseur du substrat de l'image est au moins égale à n fois la dimension transverse d'un élément d'image, dans lequel n=2, voire n= 1,5.

Selon un mode de réalisation particulier, le dispositif de production d'image est un dispositif de gravure laser apte à noircir un substrat transparent dans son épaisseur et une consigne de production est une carte de tir laser.

Selon un mode de réalisation particulier, le dispositif de production d'image est un dispositif de micro perforation apte à réaliser des micro trous dans l'épaisseur d'un substrat transparent et une consigne de production est une carte de perforation.

Selon un mode de réalisation particulier, la modélisation du dispositif de production d'image détermine une transmittance de la consigne de production comme résultat intermédiaire.

Selon un mode de réalisation particulier, la fonction de transfert combine une première fonction de transmittance transformant une consigne de production en une transmittance, une deuxième fonction de réflectance transformant une transmittance en une réflectance et une troisième fonction d'image transformant une réflectance en une image prédite.

Selon un mode de réalisation particulier, la première fonction est définie par une forme paramétrique, et les paramètres sont déterminés par calibrage.

Selon un mode de réalisation particulier, la première fonction est déterminée empiriquement, et tabulée.

Selon un mode de réalisation particulier, la deuxième fonction est donnée par la formule suivante :

$$R = F2(T) = \frac{b.k_1.T^2}{1-k_2.T^2} + \frac{(1-b).k_1.(T*M).T}{1-k_2.(T^2*M)} \,,$$

avec $R$ une matrice de réflectance, $b \in [0,1]$ un paramètre scalaire, $k_1, k_2 \in [0,1]$ deux constantes optiques, T une matrice de transmittance, * l'opérateur de convolution et M un noyau de convolution.

Selon un mode de réalisation particulier, la deuxième fonction inclut de plus un bruit K, selon la formule :

$$R = F2(T) = \left( \frac{b.k_1.T^2}{1-k_2.T^2} + \frac{(1-b).k_1.(T*M).T}{1-k_2.(T^2*M)} \right) * K \,,$$

avec * l'opérateur de convolution et K un noyau de convolution.

Selon un mode de réalisation particulier, K est un noyau bidimensionnel gaussien de déviation standard $\sigma$.

Selon un mode de réalisation particulier, $k_1 = (1-r_s).r_g.(1-r_i)$ et $k_2 = r_g.r_i$, avec $r_s$ indice de réflexion spéculaire de l'interface air image, $r_i$ indice de réflectance interne de Fresnel de l'interface air image et $r_g$ indice de réflectance intrinsèque d'un substrat réfléchissant lambertien.

Selon un mode de réalisation particulier, le noyau de convolution M est une matrice carrée unité de dimensions dxd, normalisée, $M = [1/d^2]_{dxd}$.

Selon un mode de réalisation particulier, la troisième fonction est la fonction identité.

Selon un mode de réalisation particulier, la fonction de transfert est calibrée en identifiant les paramètres b, d et éventuellement la déviation standard o, par résolution de l'équation suivante :

$$b,d,\sigma = arg\min_{\substack{b \in [0,1] \\ d > 0 \\ \hat{\sigma} \ge 0}} \sum_p \Delta(IR_p, IP_p) = arg\min_{\substack{b \in [0,1] \\ d > 0 \\ \hat{\sigma} \ge 0}} \sum_p \Delta(IR_p, F(S_p)) \,,$$

avec S une consigne de production, IR une image obtenue au moyen du dispositif de production utilisant la consigne de production S, IP une image prédite par la fonction de transfert F à partir de la consigne de production S, soit IP = F(S), p un indice parcourant les pixels, F la fonction de transfert et Δ une distance colorimétrique entre deux pixels.

Selon un mode de réalisation particulier, la résolution est alimentée par des paires de calibrage comprenant une consigne de production et une image réalisée au moyen du dispositif de production utilisant la consigne de production.

Selon un mode de réalisation particulier, l'étape de détermination d'une consigne de production améliorée SA comprend la résolution de l'équation suivante :

$$ SA = arg\min_{\hat{S}} \sum_p \left( \Delta(IO_p, IP_p) \right)^2 = arg\min_{\hat{S}} \sum_p \left( \Delta(IO_p, F(S_p)) \right)^2 \, , $$

avec S une consigne de production, IO une image objective, IP une image prédite par la fonction de transfert à partir de la consigne de production S, soit IP = F(S), p un indice parcourant les pixels, F la fonction de transfert et Δ une distance colorimétrique entre deux pixels.

Selon un mode de réalisation particulier, lors de l'étape de détermination, la consigne de production améliorée SA est déterminé pour corriger aussi au moins en partie l'effet de diffusion du laser susceptible de résulter de l'interaction laser-matière dans le matériau d'un substrat.

L'invention concerne également un procédé de production d'une image, dite image finale, comprenant les étapes suivantes :

- détermination, par un dispositif de traitement, d'une consigne de production améliorée SA selon le procédé de traitement défini ci-avant ; et
- production, par un dispositif de production d'image, de ladite image finale en utilisant ladite consigne de production améliorée SA en tant que consigne de production d'image.

L'invention concerne encore un dispositif de traitement configuré pour permettre la production d'une image, dite image finale, comportant une juxtaposition d'éléments d'image dans un substrat présentant une épaisseur et produisant une image en épaisseur telle que se produise un effet d'ombrage de chaque élément d'image sur ses éléments d'image voisins, ledit dispositif de traitement comprenant : une unité d'acquisition d'une image objective IO et une unité de détermination configurée pour déterminer, à partir de l'image objective IO, une consigne de production S, dans lequel l'unité de détermination est configurée pour :

- modéliser le dispositif de production d'image en réalisant une modélisation par une fonction de transfert F transformant une consigne de production S en une image prédite correspondante, et
- déterminer, par inversion de la fonction de transfert F, une consigne de production améliorée SA pouvant être utilisée en tant que consigne de production S par le dispositif de production pour produire ladite image finale, de sorte à corriger au moins en partie l'effet d'ombrage dans l'image finale et, éventuellement, pour corriger également au moins en partie l'effet de diffusion résultant de l'interaction laser-matière , dans lequel l'unité de détermination est configuré pour déterminer la consigne de production améliorée (SA) par un calcul itératif automatique minimisant une distance colorimétrique entre l'image objective (IO) et une image prédite(IP) par la fonction de transfert F appliquée à une consigne de production S.

Brève description des dessins

D'autres caractéristiques, détails et avantages de l'invention ressortiront plus clairement de la description détaillée donnée ci-après à titre indicatif en relation avec des dessins sur lesquels :

- la figure 1 illustre en vue de dessus un support comprenant une image réalisée par gravure laser,
- la figure 2 illustre en vue de profil le support de la figure 1,
- la figure 3 illustre l'action d'un éclairant multidirectionnel sur un élément d'une image gravée laser et le problème d'ombrage,
- la figure 4 présente un exemple de fonction t(s),
- la figure 5 représente, sous forme d'un diagramme, les étapes mises en œuvre par un dispositif de traitement et par un dispositif de production d'image, selon un mode de réalisation particulier de l'invention ;
- la figure 6 représente schématiquement l'interaction du laser dans le matériau du substrat lors d'une impression d'une image au laser ; et
- la figure 7 représente schématiquement une méthode de production d'une image utilisant un dispositif de production d'image conforme à un mode de réalisation particulier de l'invention.

Description détaillée de modes de réalisation

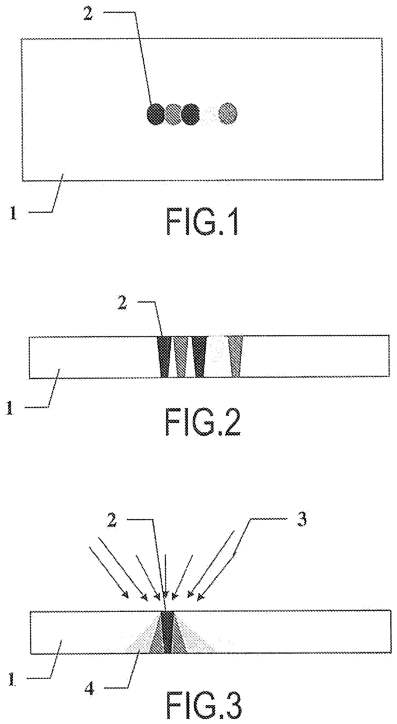

Les figures 1 et 2 illustrent un mode de réalisation d'un dispositif de production d'image. Tel qu'illustré à la figure 1, ce dispositif crée une image composée d'une juxtaposition d'éléments d'image 2 ou pixels, dans un support ou substrat 1. La particularité des procédés de production d'image envisagés dans la présente est que les éléments d'image 2 présentent une épaisseur importante, comme cela est plus particulièrement visible en vue de profil à la figure 2. Les éléments d'images 2 comprennent une teinte, une opacité et/ou une hauteur qui peuvent être variables.

Il en résulte, tel qu'illustré à la figure 3, lorsque le support 1 est soumis à un éclairage 3, typiquement multidirectionnel, ce qui est généralement le cas lorsque l'image est observée, que chaque élément d'image 2 projette sur ses voisins une ombre 4. Ceci a pour effet préjudiciable une augmentation du flou et un assombrissement de l'image produite.

Il est considéré qu'un tel effet d'ombrage se produit, au moins de manière à être détecté, lorsque l'épaisseur de l'image, soit plus précisément l'épaisseur du substrat supportant l'image 1, est au moins égale à deux fois, voire même 1,5 fois, la dimension transverse d'un élément d'image 2. L'épaisseur du substrat 1 détermine la hauteur/épaisseur maximale d'un élément d'image 2. La dimension transverse d'un élément d'image 2 est une de ses dimensions dans le plan image, soit selon les cas sa largeur, sa longueur, ou son diamètre. Le rapport épaisseur/dimension transverse est au moins égal à deux. Il ne présente pas de limite supérieure. Pour des réalisations par gravure laser, des points laser de diamètre typique $40\mu m$ peuvent être réalisés dans une couche sensible au laser d'épaisseur pouvant atteindre $400\mu m$, soit un rapport 10. Dans les modes de réalisation classiquement utilisés, ce rapport est d'environ 5, l'épaisseur du substrat 1 étant comprise entre $150\mu$ et 250um.

Dans le présent document, l'« épaisseur du substrat » (ou l'épaisseur de l'image) correspond à l'épaisseur totale du substrat contenant les éléments d'image et dans laquelle les rayons lumineux (issus d'un éclairage) sont susceptibles de circuler. Cette épaisseur du substrat peut comprendre une partie supérieure de substrat située au-dessus des éléments d'image et/ou une partie inférieure de substrat située en-dessous des éléments d'image.

Dans le présent document, l'invention s'applique plus particulièrement à des images dont l'épaisseur du substrat supportant l'image est au moins égale à deux fois, voire même 1,5 fois, la dimension transverse d'un élément d'image 2.

Les dispositifs de production d'image créant une image en épaisseur telle que se produise un effet d'ombrage comprennent les dispositifs par gravure laser.

Le principe de production d'une image par gravure laser utilise un support 1 dont au moins une partie est sensible au laser en ce qu'elle noircit au point où un tir laser est réalisé et rencontre ladite partie. L'épaisseur d'un tel élément d'image 2 et donc son niveau d'opacité, sont fonction de l'intensité et/ou durée du tir laser. Un laser permet de tirer avec précision sur un point donné et avec une intensité finement modulée. Une série de tir laser permet ainsi de créer, élément d'image 2 par élément d'image 2, une image composée d'éléments d'image 2 juxtaposés d'opacité variable et choisie.

L'utilisation directe de ce principe permet de produire une image monochrome. La résolution des niveaux de gris est importante en liaison avec la résolution d'intensité du laser.

Il est encore connu de réaliser une image polychrome en appliquant le principe ci-dessus à un support 1 comprenant, superposé avec la couche sensible au laser, une matrice de points de couleur. Un élément noirci au laser permet de proportionnellement masquer un point de couleur. Avec une matrice comprenant des couleurs choisies dans une base colorimétrique, des points laser masquent proportionnellement et sélectivement les points de couleur de manière à exprimer une teinte par composition des couleurs de base non masquées.

Les dispositifs de production d'image créant une image en épaisseur telle que se produise un effet d'ombrage comprennent encore les dispositifs par micro perforation.

Le principe de production d'une image par micro perforation utilise un support dans lequel sont réalisés des micro trous. En faisant varier la taille, le nombre et/ou la profondeur des micro trous, il est possible de créer un élément d'image d'opacité variable déterminée. Une série de micro trous permet ainsi de créer, élément d'image 2 après élément d'image 2, une image composée d'éléments d'image 2 juxtaposés d'opacité variable et choisie. L'utilisation directe de ce principe permet de produire une image monochrome.

Tous ces dispositifs ont en commun de produire une image en épaisseur. Cette épaisseur entraîne un effet préjudiciable d'ombrage qui floute et assombrit l'image réalisée, dite image finale, par rapport à l'image objective que l'on souhaite obtenir.

L'invention est applicable à tous ces dispositifs.

Afin de réduire les conséquences de l'effet d'ombrage, et éventuellement pour réduire également l'effet de diffusion résultant de l'interaction laser-matière, l'invention propose de réutiliser le dispositif de production d'image dans un procédé de production d'image, après amélioration de la consigne de production. Le dispositif de production d'image produit une image I, ou image réalisée IR (appelée aussi image finale IR), à partir d'une consigne de production S. Ce procédé de production d'image peut être quelconque.

Dans le cas d'un dispositif de micro perforation, la consigne de production S est une carte de perforation définissant où un élément d'image doit être réalisé et combien de trous, de quelles tailles et de quelles profondeurs comporte cet élément d'image.

Dans le cas d'un dispositif de gravure laser, la consigne de production S est une carte de tir. Une carte de tir S est une matrice bidimensionnelle comprenant autant d'éléments que d'éléments d'image 2, chaque élément étant spatialement associé à un élément d'image 2et comprenant une intensité de tir du laser. Cette intensité est typiquement indiquée par une valeur comprise entre 0 et 255. 0 indiquant, par exemple, une absence de tir laser et donc un point « blanc » et 255 indiquant une intensité maximale et donc un point « noir ». Alternativement une carte de tir S peut être normalisée, chacun de ses éléments étant compris entre 0 et 1.

Selon l'art antérieur une consigne de production S est déterminée par analyse de l'image objective IO que l'on veut produire. Cette consigne de production S est fournie au dispositif de production d'image qui réalise la production (série de tirs laser ou de micro trous) selon la consigne de production S pour produire une image réalisée IR (ou image finale IR) qui est alors perturbée par l'effet d'ombrage, et donc différente de l'image objective IO.

Dans ce document, l'image objective IO est une image cible (ou image prédéterminée) que l'on souhaite produire. L'image finale IR est l'image effectivement produite par le dispositif de production d'image à partir d'une consigne de production.

Selon l'invention, le procédé réutilise le dispositif de production d'image, mais au préalable remplace (i.e. améliore) la consigne de production S de l'art antérieur par une consigne de production améliorée SA. Cette consigne de production améliorée SA est fournie au dispositif de production d'image qui réalise la production d'une image de manière identique, mais en utilisant la consigne de production améliorée SA, pour produire une nouvelle image réalisé IR améliorée. Cette image est améliorée en ce qu'elle est moins sujette aux conséquences de l'effet d'ombrage.

Dans ce document, on entend par « consigne de production amélioré », une consigne de production destinée à être prise en entrée par un dispositif de production d'image afin de produire une image par impression au laser, cette consigne de production étant améliorée par rapport à une consigne de production conventionnelle afin de corriger notamment l'effet d'ombrage comme expliqué ci-avant.

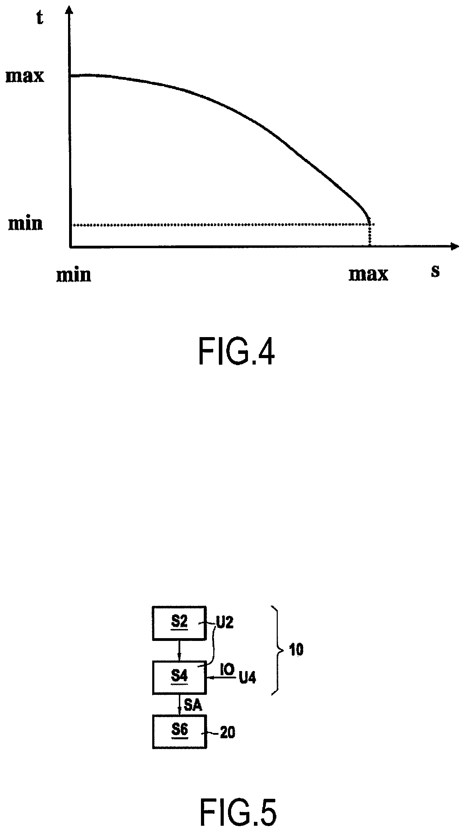

La consigne de production est améliorée, en prenant en compte l'effet d'ombrage de manière à en inverser les effets, dans la mesure du possible, sous forme de corrections intégrées dans la nouvelle consigne de production SA. Dans la mesure du possible, on peut éventuellement aussi inverser l'effet de diffusion résultant de l'interaction laser-matière dans le matériau du substrat. Pour cela, dans un mode de réalisation particulier, le procédé selon l'invention procède en deux étapes S2 et S4 permettant de calculer une consigne de production SA améliorée, comme illustré en figure 5. Les étapes S2 et S4 décrites ci-dessous sont réalisées par un dispositif de traitement 10 configuré pour permettre ultérieurement la production d'une image finale IR, ce dispositif de traitement 10 prenant par exemple la forme d'un calculateur ou d'un ordinateur.

Le dispositif de traitement 10 peut comprendre un processeur et une mémoire non-volatile, cette dernière pouvant stocker un programme d'ordinateur exécutable par le processeur pour réaliser les étapes S2 et S4 décrites ci-dessous.

Une première étape S2 consiste à modéliser le dispositif de production d'image 20 sous forme d'une fonction de transfert F transformant une consigne de production S en une image prédite IP. Cette image issue de la fonction de transfert est nommée image prédite IP. Cette fonction de transfert F permet donc, pour une pluralité de consigne de production S, de déterminer une image prédite IP correspondante.

Au cours d'une deuxième étape S4, le procédé réalise une inversion, de tout ou partie de cette fonction de transfert F afin de déterminer une consigne de production améliorée SA, telle que l'image IP prédite, transformée de cette consigne de production SA par la fonction de transfert F, IP = F(SA), soit la plus proche possible de l'image objective IO, soit F(SA) = IP ≈ IO. Autrement dit, lors de cette deuxième étape S4, le dispositif de traitement 10 détermine, par inversion de la fonction de transfert F (ou d'au moins une partie de cette fonction F), une consigne de production, dite consigne de production améliorée SA, pouvant être utilisée en tant que consigne de production par le dispositif de production d'image 20 pour produire ladite image finale IR, de sorte à corriger au moins en partie l'effet d'ombrage susceptible de se produire dans l'image finale IR. Cette consigne de production améliorée SA peut éventuellement être déterminée afin de corriger aussi au moins en partie l'effet de diffusion du laser résultant de l'interaction laser-matière dans un substrat prédéfini. Cette correction de l'effet d'ombrage, et éventuellement aussi de l'effet de diffusion du laser, est réalisée par l'unité de traitement 10 par rapport à l'image objective IO que l'on souhaite produire.

Les étapes S2 et S4 permettent de déterminer, à l'aide du dispositif de traitement 10, la consigne de production améliorée SA qui est apte à être utilisée par un dispositif de production d'image 20 pour produire une image finale IR.

Selon un exemple particulier, le dispositif de traitement 10 comprend (figure 5) :

- une unité d'acquisition U2 configurée pour acquérir l'image objective IO ;
- une unité de détermination U4 configurée pour déterminer la consigne de production améliorée SA, conformément aux étapes S2 et S4.

Ces unités U2 et U4 sont par exemple constituées par le processeur du l'unité de traitement exécutant un programme d'ordinateur conforme à l'invention.

Comme représenté en figure 5, un dispositif de production d'image 20 peut ensuite être utilisé pour produire (S6) l'image finale IR en utilisant la consigne de production améliorée SA en tant que consigne de production d'image. Autrement dit, le dispositif de production d'image 20 prend en entrée la consigne de production améliorée SA pour produire l'image finale IR, cette dernière étant avantageusement proche de l'image objective IO souhaitée. Ce dispositif de production d'image 20 peut être un quelconque dispositif de production d'image tel que décrit ci-avant par exemple (dispositif de production d'image par gravure laser, par micro perforation...).

Le dispositif de production d'image 20 peut par exemple produire, à partir de la consigne de production améliorée SA, une image dans un substrat. L'image ainsi produite peut comprendre une pluralité d'éléments d'image formés au moyen d'un laser. Le substrat peut être en plastique (tel que du polycarbonate par exemple). Une technique de production d'image pouvant être utilisée est décrite plus en détail ultérieurement en référence à la figure 7.

L'invention vise également un système comprenant le dispositif de traitement 10 et le dispositif de production d'image 20 mentionnés ci-avant. Dans un exemple particulier, le dispositif de traitement 10 et le dispositif de production d'image 20 forment un seul et même dispositif.

La fonction de transfert F qui transforme une consigne de production S en une image prédite IP peut être obtenue selon toute méthode et/ou modélisation.

Selon une caractéristique avantageuse, il peut être utilisé pour représenter le dispositif de production d'image IP = F(S), une modélisation déterminant la transmittance T de la consigne de production S comme résultat/variable intermédiaire. Ceci revient à décomposer la fonction de transfert F en deux fonctions G1, G2 telles que IP = F(S) = G2(G1(S)), où G1 est une fonction qui fournit la transmittance T en fonction de la consigne de production S, T = G1(S) et G2 est une fonction qui fournit l'image prédite IP en fonction de la transmittance T.

Pour mémoire, la transmittance est une matrice dont chaque élément est une transmittance élémentaire t du pixel d'une image I, IR, IP associé. La transmittance élémentaire t représente la fraction de flux lumineux traversant le pixel associé. La transmittance est encore appelée transparence.

Un tel découpage faisant apparaître la grandeur transmittance T est avantageux en ce qu'il donne un sens physique à la modélisation et surtout en ce qu'il permet d'utiliser une modélisation existante, faisant intervenir la transmittance T. Ainsi, il est possible d'utiliser, par exemple, un des nombreux modèles prédictifs existants déterminant une réflectance R à partir de la transmittance T.

Pour mémoire, la réflectance R est une matrice dont chaque élément est une réflectance élémentaire r du pixel d'une image I, IR, IP associée. La réflectance élémentaire r représente la fraction de flux lumineux réfléchie par le pixel associé.

On sait d'après les lois de l'optique qu'un flux lumineux rencontrant un matériau transparent est en partie transmis, en partie réfléchi et en partie absorbé. De la conservation des énergies, il découle que la somme de ces trois phénomènes est constante. La transmittance t, la réflectance r et l'absorbance a sont liées par la relation $t + r + a = 1$.

L'utilisation d'un modèle prédictif, déterminant la réflectance R en fonction de la transmittance T, permet d'écrire la fonction de transfert IP = F(S) sous la forme d'une combinaison de trois fonctions, soit IP = F3(F2(F1(S))). Ceci permet de décomposer la fonction de transfert F en trois sous fonctions/modèles : une première fonction F1 de transmittance transformant une consigne de production S en une transmittance T, T = F1(S), une deuxième fonction F2 de réflectance transformant une transmittance T en une réflectance R, R = F2(T) et une troisième fonction F3 d'image transformant une réflectance R en une image prédite IP, IP = F3(R).

La première fonction F1 de transmittance est la plus spécifique. Elle dépend directement du dispositif de production d'image.

Selon une mode de réalisation elle peut être est définie par une forme paramétrique. Les paramètres sont ensuite déterminés par apprentissage/calibrage au moyen d'un jeu de paires de calibrage, chaque paire comprenant une consigne de production S et la transmittance T résultante obtenue au moyen du dispositif de production d'image.

L'homme du métier sait déterminer une forme paramétrique adaptée au phénomène à modéliser.

Un exemple illustratif va maintenant être donné dans le cas particulier simplifié d'un dispositif de gravure laser appliqué à la production d'une image monochrome. Dans ce cas, la transmittance T est avantageusement homogène à la consigne de production S. T est une matrice de mêmes dimensions que S, dont chaque élément est un scalaire t. Ces hypothèses simplificatrices permettent de travailler pixel par pixel et de déterminer une fonction t=t(s), où t est la transmittance élémentaire d'un pixel et s est l'intensité laser du point/pixel homologue associé de la consigne de production S, encore noté $S_p$. p est un indice parcourant les points/pixels d'une matrice : I, IP, IR, IO, T, R, ou encore ici S. La fonction t=t(s) est une fonction scalaire. Elle peut être étendue à l'ensemble des pixels d'une matrice.

La fonction t=t(s) peut être déterminée au moyen d'images réalisées IR par le dispositif de production d'image sur la base de consignes de production S étalons. Ces étalons comportent, par exemple, des intensités laser équi réparties dans tout l'intervalle d'intensité, soit 0-255. La transmittance t est ensuite déterminée sur l'image réalisée IR, par exemple par mesure photométrique. Il est ainsi possible de déterminer une valeur de transmittance t associée à chaque valeur s d'intensité et donc de tabuler la fonction t=t(s). Cette fonction est nécessairement injective et peut aisément être inversée.

La figure 4 illustre un exemple d'une telle fonction t(s). Pour une intensité s nulle, le support 1 reste transparent et une transmittance t maximale est obtenue. Pour une intensité s maximale, le substrat est opacifié et la transmittance t est minimale. Entre ces deux points la fonction est strictement monotone.

De nombreux modèles prédictifs, déterminant la réflectance R en fonction de la transmittance T, existent et sont décrits dans la littérature : réflexion diffuse de la lumière, réflexion surfacique de Fresnel, diffusion latérale de la lumière, gain ponctuel physique et optique, modèle de Yule-Nielsen, modèle spectral de Neugebauer, modèle de Ruckdeshel et Hauser, modèle de Clapper-Yule, pour ne citer que les plus connus. Ils peuvent tous être utilisés pour réaliser la deuxième fonction F2.

Un mode de réalisation préféré est proposé et décrit sur la base d'un modèle de Clapper-Yule « faible diffraction » modifié. Selon ce modèle, la deuxième fonction F2 est donnée par la formule :

$$R = F2(T) = \frac{b.k_1.T^2}{1-k_2.T^2} + \frac{(1-b).k_1.(T*M).T}{1-k_2.(T^2*M)} \, ,$$

$R$ est la matrice de réflectance,
$b \in [0,1]$ est un paramètre scalaire,
$k_1, k_2 \in [0,1]$ sont deux constantes optiques,
T est la matrice de transmittance,
* est l'opérateur de convolution et
M est un noyau de convolution.

Ce modèle permet de calculer une réflectance R en fonction d'une transmittance T. Ce modèle est modifié, relativement au modèle de Clapper-Yule, notamment par l'adjonction de la convolution et d'un noyau de convolution M. Ce noyau M permet avantageusement d'introduire explicitement une modélisation du phénomène d'ombrage caractéristique du problème traité.

L'opération de convolution * est bien connue dans le domaine du traitement d'image. Pour mémoire, la convolution A*N d'une matrice A avec un noyau N, matrice carré de dimension impaire, produit une matrice B de mêmes

$$b_{i,j} = \left(A * N\right)_{i,j} = \sum_k \sum_l A_{i-k,j-l}.N_{k,l}$$

dimensions que A. Un élément $b_{i,j}$ de B est défini par

Selon une autre caractéristique, la deuxième fonction F2 comprend encore un opérateur K. Cet opérateur K est destiné à modéliser la fonction de transfert d'un scanner utilisé lors de l'acquisition de l'image réalisée IR, et que l'on souhaite comparer avec une image prédite IP.

Cet opérateur peut comprendre toute modification de l'image telle que : mise à l'échelle, interpolation, linéarisation, etc.

Selon un mode de réalisation, la deuxième fonction F2 est définie par la formule :

$$R = F2(T) = \left( \frac{b.k_1.T^2}{1-k_2.T^2} + \frac{(1-b).k_1.T(T*M)}{1-k_2.(T^2*M)} \right) * K$$

où :

R, b, k1, k2, T, M désignent les mêmes éléments que précédemment,
* est l'opérateur de convolution et
K est un noyau de convolution.

L'opérateur K est ici exprimé sous la forme d'une convolution avec un noyau de convolution K.

Selon un mode de réalisation possible, l'opérateur K modélise le scanner par un simple bruit K.

Selon un mode de réalisation ce bruit est, par exemple, un bruit bidimensionnel gaussien de déviation standard $\sigma$. L'homme du métier sait déterminer un tel noyau K.

Selon un mode de réalisation possible $k_1 = (1-r_s).r_g.(1-r_i)$ et $k_2 = r_g.r_i$, avec $r_s$ indice de réflexion spéculaire de l'interface air image, $r_i$ indice de réflectance interne de Fresnel de l'interface air image et $r_g$ indice de réflectance intrinsèque d'un substrat réfléchissant lambertien. Ces trois indices sont connus ou déterminable par l'homme du métier. Les deux premiers sont connus : $r_s$ =0,04, $r_f$ = 0,6 . $r_g$ peut être déterminé par la formule $r_g = \dfrac{R_w}{r_f . R_w + (1 - r_s)(1 - r_f)}$, où $R_w$ est la réflectance du support d'image 1 blanc, soit le support d'image 1 avant toute opération de production d'image. $r_g$ dépend du matériau. $R_w$ peut être obtenue par mesure de la réflectance sur un support d'image 1 vierge.

Il a été vu que le noyau de convolution M peut avantageusement être utilisé pour modéliser l'effet d'ombrage. La convolution est particulièrement adaptée en ce qu'elle permet d'introduire une influence d'un point sur son voisinage. Or, le phénomène d'ombrage est exactement cela : chaque point projette une ombre sur ses voisins.

L'homme du métier sait définir ou modifier le contenu du noyau M afin de modéliser au mieux le phénomène physique d'ombrage.

Selon un possible mode de réalisation simple, l'ombrage peut être considéré introduire un flou. Un noyau de convolution M possible pour réaliser un flou est, de manière connue, une matrice carrée unité [1], soit une matrice carrée ne contenant que des 1. Afin que la convolution soit unitaire, et conserve la luminance, la norme du noyau M est avantageusement normalisée à 1. Soit M = [$1/d^2$]$_{dxd}$, avec d la dimension du noyau M. Un tel noyau unité normalisé réalise, par l'effet de la convolution, un moyennage spatial d'un point avec son voisinage. Un noyau de convolution est une matrice carrée de dimension dxd, avec préférentiellement d impair. La valeur de d détermine ici la taille du voisinage impacté par l'effet d'ombrage.

Selon une caractéristique, la dimension d est un paramètre, pris comme inconnue, et est déterminée lors du calibrage de la fonction de transfert F.

La troisième fonction F3 d'image permet de transformer une réflectance R en une image prédite IP, IP = F3 (R) . La réflectance R est la quantité de lumière réfléchie lorsque le support 1 est éclairé par un éclairage multidirectionnel 3. Aussi la matrice R est, sous certaines hypothèses, proportionnelle à l'image. Selon une caractéristique, en considérant que les facteurs de proportionnalité sont égaux à 1, la fonction F3 est la fonction identité. Soit IP = F3(R) = R.

Il est ainsi possible de construire une fonction de transfert F. Cette fonction de transfert F calcule une image prédite IP en fonction d'une consigne de production S. Selon les hypothèses retenues pour F, certains paramètres restent à déterminer.

Ainsi, selon les hypothèses illustratives indiquées précédemment, la fonction de transfert F est déterminée par la connaissance des paramètres b et d. Si un opérateur K est de plus considéré, il faut aussi connaître les paramètres définissant cet opérateur K, soit dans le cas illustratif d'un bruit gaussien, sa déviation standard $\sigma$.

Avec une autre modélisation de F, des paramètres différents pourraient devoir être déterminés. La méthode de détermination par calibrage/apprentissage reste cependant identique.

Selon une caractéristique, la détermination des paramètres définissant la fonction de transfert F est réalisée par calibrage, ou apprentissage. Ceci permet de résoudre, les paramètres, par exemple b, d et éventuellement la déviation standard $\sigma$, étant les inconnues, une équation de la forme :

$$paramètres = a\,rg\min \sum_p \Delta(IR_p, IP_p) = a\,rg\min \sum_p \Delta(IR_p, F(S_p))$$

Cette équation est une fonction objective. La résolution consiste, de manière connue, à déterminer les valeurs optimales des paramètres mentionnés à gauche afin de minimiser l'expression à droite. Cette résolution, de par le nombre d'inconnues important, est le plus souvent réalisée par un procédé itératif, mis en œuvre automatique au moyen d'un solveur informatique. Le principe est de faire varier les paramètres recherchés, indiqués à gauche, dans l'expression de droite, jusqu'à obtenir les valeurs optimales des paramètres qui minimisent l'expression.

Dans le cas présent l'expression à minimiser compare une image réalisée IR, réalisée physiquement, obtenue par le dispositif de production d'image en utilisant la consigne de production S, avec une image prédite IP, obtenue au moyen de la fonction de transfert F à partir de cette même consigne de production S, IP = F(S). Ces deux images IR et IP sont comparées pixel à pixel. $IR_p$ est un pixel de l'image réalisée IR, telle qu'observée ou scannée. $IP_p$ ou $F(S_p)$ est un pixel de l'image prédite IP par la fonction de transfert F à partir de la consigne de production S. p est un indice parcourant tous les pixels de chacune des deux images réalisée IR ou prédite IP. Chaque pixel d'une image est comparé avec le pixel homologue de l'autre image au moyen d'un opérateur de différence/distance $\Delta$ fournissant une valeur positive ou nulle indicative de la différence. La fonction objective à minimiser somme toutes ces différences, pour l'ensemble des pixels.

Selon un mode de réalisation, l'opérateur $\Delta$ est une distance colorimétrique. L'homme du métier connait de nombreuses formulations de telles distances colorimétriques.

Dans le cas d'images monochromes, chaque pixel étant scalaire, l'opérateur $\Delta$ peut se résumer à une valeur absolue de la différence.

Ceci permet de déterminer les paramètres et ainsi de définir complètement la fonction de transfert F.

Pour un tel mode de réalisation il convient d'alimenter la résolution par des paires de calibrage. Chaque paire de calibrage comprend une consigne de production S et une image réalisée IR correspondante obtenue par le procédé initial de production au moyen de la consigne de production S. Ceci nécessite de réaliser physiquement une série d'images IR à partir d'une série de consignes de production S. Chaque image réalisée IR est scannée afin de pouvoir être comparée avec l'image prédite IP = F(S) correspondante, issue de la même consigne de production S. Le nombre de telles paires de calibrage dépend du nombre de paramètres inconnus à déterminer.

Dans l'exemple illustratif, où F dépend de b, d et $\sigma$, un jeu de quelques dizaines de paires de calibrage est suffisant pour calibrer la fonction de transfert F et déterminer les valeurs optimales de chacun des paramètres b, d et $\sigma$. Ce jeu de calibrage comprend par exemple : 20 ou 30 consignes de production uniformes comprenant chacune une unique intensité laser, ces intensités étant variables de manière équitablement répartie entre l'intensité nulle et l'intensité maximale, d'autres consignes de production comprenant des motifs périodiques de fréquences variables en ligne et/ou en colonne, ou encore des consignes de production comprenant des motifs indicatifs de l'application.

Une fois la fonction de transfert F déterminée, une image prédite IP = F(S) obtenue à partir d'une consigne de production S donnée peut être calculée. En comparant cette image prédite IP avec l'image objective IO et en tentant de minimiser leur distance, il est possible d'optimiser une nouvelle fonction objective et de déterminer une consigne de production améliorée SA.

Ceci peut être réalisé en résolvant une équation de la forme :

$$ SA = arg\min_{\dot{S}} \sum_p \left( \Delta(IO_p, IP_p) \right)^2 = arg\min_{\dot{S}} \sum_p \left( \Delta(IO_p, F(S_p)) \right)^2, $$

où

S est une consigne de production,
IO est une image objective,
IP est une prédite obtenue à partir de S, soit IP = F(S),
p est un indice parcourant les pixels,
F est la fonction de transfert et
$\Delta$ est une distance colorimétrique entre deux pixels.

Un exemple de distance colorimétrique, pouvant être utilisé ici et/ou dans les résolutions précédentes, est la distance colorimétrique $\Delta E_{94}$ tel que définie par la commission internationale de l'éclairage (CIE).

Comme expliqué ci-avant, la présente invention peut s'appliquer à un procédé de production d'image quelconque. Autrement dit, l'invention permet d'améliorer une consigne de production apte à être appliquée à un dispositif de production d'image quelconque afin d'obtenir une image finale par impression au laser. Cette impression au laser peut être réalisée selon divers techniques et dans une quelconque couche d'un substrat. Comme déjà indiqué, le dispositif de production d'image utilisé peut être un quelconque dispositif de production d'image tel que décrit ci-avant par exemple (dispositif de production d'image par gravure laser, par micro perforation...).

La figure 7 représente la section 100 d'un document identitaire comprenant une image laser couleur produite selon un procédé de fabrication auquel il est possible d'appliquer le principe de la présente invention. Ce document comprend un corps de document 10 opaque, par exemple blanc. Sur sa face avant 120, une couche de protection transparente lasérisable 20 est laminée sur des sous pixels 30 de diverses couleurs (par exemple Rouge, Vert, Bleu), et aussi éventuellement des décorations et/ou système anti-contrefaçon 40. Les sous pixels 30 forment par exemple une matrice de sous pixels. Des décorations et/ou systèmes anti-contrefaçon peuvent être formés également sur la face arrière 50 du document identitaire. L'ensemble est protégé par une couche protectrice 90 laminée sur la face arrière 50 du document identitaire. Selon un procédé de production d'image particulier au laser, un faisceau laser 60 est appliqué pour générer par carbonisation des niveaux de gris 70 dans la couche lasérisable 70 au-dessus de certains sous pixels 30, formant ainsi les niveaux de gris 70 d'une image couleur laser personnalisée. Ces niveaux de gris 70 sont des zones opacifiées formées par carbonisation au laser dans la couche lasérisable 20. L'application du laser permet d'opacifier localement la couche lasérisable 10 afin d'opacifier certains sous pixels 30 situés en regard, de sorte à révéler une image couleur à partir de la matrice de sous pixels. Cette image finale est observée par l'observateur 80 par réflexion de la lumière ambiante sur l'image laser couleur personnalisée au travers de la couche lasérisable 20. D'autres modes de réalisation sont possibles selon lesquels de la lumière, provenant d'une source lumineuse quelconque, peut notamment être appliquée depuis la face avant 120 et/ou la face arrière 50 du document identitaire pour révéler l'image finale. La disposition des sous pixels 30 et de la couche lasérisable 10 peuvent également être adaptée selon le cas. En particulier, la couche lasérisable 10 peut alternativement être disposée en-dessous des pixels 30 afin de révéler l'image finale par carbonisation au laser comme déjà expliqué ci-dessus. Par ailleurs, la couche lasérisable 10 peut être en plastique (tel que du polycarbonate par exemple).

La présente invention peut notamment s'appliquer à la réalisation d'un document identitaire, ou de toute autre impression d'image, selon la méthode de production représentée en figure 7. En particulier, l'invention peut être mise en œuvre pour obtenir une consigne de production améliorée apte à être utilisée en tant que consigne de production par un dispositif de production d'image destiné à réaliser une image comme décrit en référence à la figure 7. L'invention peut avantageusement permettre de réduire, ou éviter, l'effet d'ombrage pouvant résulter des zones opacifiées 70 dans la couche lasérisable 20, et éventuellement permet de corriger aussi au moins en partie l'effet de diffusion du laser résultant de l'interaction laser-matière dans le matériau du substrat.

**Revendications**

1. Procédé de traitement destiné à permettre la production d'une image (IR), dite image finale, comportant une juxtaposition d'éléments d'image (2) dans un substrat (1) présentant une épaisseur et produisant une image en épaisseur telle que se produise un effet d'ombrage de chaque élément d'image (2) sur ses éléments d'image voisins,

   ledit procédé comprenant une étape de détermination, à partir d'une image cible dite image objective (IO), d'une consigne de production améliorée (SA) apte à être utilisée en entrée par
   un dispositif de production d'image (20) pour produire ladite image finale (IR); où l'étape de détermination comprend les étapes suivantes :

      - modélisation du dispositif de production d'image par une fonction de transfert F transformant une pluralité de consignes de production S en une image prédite (IP) correspondante, et
      - détermination, par inversion de la fonction de transfert F, de la consigne de production améliorée (SA) apte à être utilisée en entrée par le dispositif de production pour produire ladite image finale (IR), de sorte à corriger au moins en partie l'effet d'ombrage dans l'image finale (IR), dans lequel ladite étape de détermination comprend un calcul itératif automatique minimisant une distance colorimétrique entre l'image objective (IO) et une image prédite (IP) par la fonction de transfert F appliquée à une consigne de production S.

2. Procédé selon la revendication 1, dans lequel, lors de l'étape de détermination, la consigne de production améliorée SA est choisie pour que l'image prédite (IP) correspondante soit la plus proche possible de l'image objective (IO) afin de minimiser l'effet d'ombrage dans l'image finale (IR).

3. Procédé selon la revendication **1 ou 2,** dans lequel l'épaisseur du substrat (1) de l'image est au moins égale à n fois la dimension transverse d'un élément d'image (2), dans lequel n= 1,5.

4. Procédé selon l'une quelconque des revendications **1** à 3, où le dispositif de production d'image est un dispositif de gravure laser apte à noircir un substrat (1) transparent dans son épaisseur et où une consigne de production S est une carte de tir laser.

5. Procédé selon l'une quelconque des revendications **1** à **3,** où le dispositif de production d'image est un dispositif de micro perforation apte à réaliser des micro trous dans l'épaisseur d'un substrat transparent et où une consigne de production S est une carte de perforation.

6. Procédé selon l'une quelconque des revendications **1** à **5,** où la modélisation du dispositif de production d'image détermine une transmittance T de la consigne de production S comme résultat intermédiaire.

7. Procédé selon l'une quelconque des revendications **1** à **6,** où la fonction de transfert F combine une première fonction F1 de transmittance transformant une consigne de production S en une transmittance T, T = F1(S), une deuxième fonction F2 de réflectance transformant une transmittance T en une réflectance R, R = F2(T) et une troisième fonction F3 d'image transformant une réflectance R en une image prédite IP, IP = F3(R), soit IP = F(S) = F3(F2(F1(S))).

8. Procédé selon la revendication 7, où la première fonction F1 est définie par une forme paramétrique, et les paramètres sont déterminés par calibrage.

9.   Procédé selon l'une quelconque des revendications 7 ou **8,** où la première fonction F1 est déterminée empiriquement, et tabulée.

10.  Procédé selon l'une quelconque des revendications 7 à **9,** où la deuxième fonction F2 est donnée par la formule suivante :

$$R = F2(T) = \frac{b.k_1.T^2}{1-k_2.T^2} + \frac{(1-b).k_1.(T*M).T}{1-k_2.(T^2*M)} \; ,$$

avec

   $R$ une matrice de réflectance,
   $b \in [0,1]$ un paramètre scalaire,
   $k_1, k_2 \in [0,1]$ deux constantes optiques,
   T une matrice de transmittance,
   * l'opérateur de convolution et
   M un noyau de convolution.

11.  Procédé selon la revendication **10,** où la deuxième fonction F2 inclut de plus un bruit K, selon la formule :

$$R = F2(T) = \left( \frac{b.k_1.T^2}{1-k_2.T^2} + \frac{(1-b).k_1.(T*M).T}{1-k_2.(T^2*M)} \right) * K \; ,$$

avec

   * l'opérateur de convolution et
   K un noyau de convolution.

12.  Procédé selon la revendication **11,** où K est un noyau bidimensionnel gaussien de déviation standard $\sigma$.

13.  Procédé selon l'une quelconque des revendications 10 à **12,** où $k_1 = (1-r_s).r_g.(1-r_i)$ et $k_2 = r_g.r_i$, avec $r_s$ indice de réflexion spéculaire de l'interface air image, $r_i$ indice de réflectance interne de Fresnel de l'interface air image et $r_g$ indice de réflectance intrinsèque d'un substrat réfléchissant lambertien.

14.  Procédé selon l'une quelconque des revendications 10 à **13,** où le noyau de convolution M est une matrice carrée unité de dimensions dxd, normalisée, M = $[1/d^2]_{dxd}$.

15.  Procédé selon l'une quelconque des revendications 7 à **14,** où la troisième fonction F3 est la fonction identité.

16.  Procédé selon l'une quelconque des revendications 7 à **15,** où la fonction de transfert F est calibrée en identifiant les paramètres b, d et la déviation standard $\sigma$, par résolution de l'équation suivante :

$$b,d,\sigma = arg \min_{\substack{b\in[0,1]\\ d>0 \\ \hat{\sigma}\geq 0}} \sum_p \Delta(IR_p, IP_p) = arg \min_{\substack{b\in[0,1]\\ d>0 \\ \hat{\sigma}\geq 0}} \sum_p \Delta(IR_p, F(S_p)) \; ,$$

avec

   S une consigne de production,
   IR une image finale obtenue au moyen du dispositif de production utilisant la consigne de production S,
   IP une image prédite par la fonction de transfert F à partir de la consigne de production S, soit IP = F(S),
   p un indice parcourant les pixels,
   F la fonction de transfert et
   $\Delta$ une distance colorimétrique entre deux pixels.

**17.** Procédé selon la revendication **16**, où la résolution est alimentée par des paires de calibrage comprenant une consigne de production S et une image finale (IR) au moyen du dispositif de production utilisant la consigne de production S.

**18.** Procédé selon l'une quelconque des revendications **1** à **17,** où l'étape de détermination d'une consigne de production améliorée SA comprend la résolution de l'équation suivante :

$$SA = arg \min_{\hat{S}} \sum_{p} \left( \Delta(IO_p, IP_p) \right)^2 = arg \min_{\hat{S}} \sum_{p} \left( \Delta(IO_p, F(S_p)) \right)^2 \text{ ,}$$

avec

S une consigne de production,
IO une image objective,
IP une image prédite par la fonction de transfert à partir de la consigne de production S, soit IP = F(S),
p un indice parcourant les pixels,
F la fonction de transfert et
$\Delta$ une distance colorimétrique entre deux pixels.

**19.** Procédé selon la revendication 4 dans lequel, lors de l'étape de détermination, la consigne de production améliorée SA est déterminé pour corriger aussi au moins en partie l'effet de diffusion du laser susceptible de résulter de l'interaction laser-matière dans le matériau d'un substrat.

**20.** Procédé de production d'une image (IR), dite image finale, comprenant les étapes suivantes :

- détermination (S2, S4), par un dispositif de traitement (10), d'une consigne de production améliorée (SA) selon l'une quelconque des revendications 1 à 19 ; et
- production, par un dispositif de production d'image (20), de ladite image finale (IR) en utilisant ladite consigne de production améliorée (SA) en tant que consigne de production d'image.

**21.** Dispositif de traitement (10) configuré pour permettre la production d'une image (IR), dite image finale, comportant une juxtaposition d'éléments d'image (2) dans un substrat (1) présentant une épaisseur et produisant une image en épaisseur telle que se produise un effet d'ombrage de chaque élément d'image (2) sur ses éléments d'image voisins, ledit dispositif de traitement comprenant :

- une unité d'acquisition (U2) d'une image cible dite image objective (IO), et
- une unité de détermination (U4) configurée pour déterminer, à partir de l'image objective (IO), une consigne de production améliorée (SA) apte à être utilisée en entrée par un dispositif de production d'image (20) pour produire ladite image finale (IR), où l'unité de détermination est configurée pour :
- modéliser le dispositif de production d'image en réalisant une modélisation par une fonction de transfert F transformant une pluralité de consignes de production S en une image prédite (IP) correspondante, et
- déterminer, par inversion de la fonction de transfert F, la consigne de production améliorée (SA) pouvant être utilisée en entrée par le dispositif de production pour produire ladite image finale (IR), de sorte à corriger au moins en partie l'effet d'ombrage dans l'image finale (IR) ;

dans lequel l'unité de détermination est configuré pour déterminer la consigne de production améliorée SA par un calcul itératif automatique minimisant une distance colorimétrique entre l'image objective (IO) et une image prédite (IP) par la fonction de transfert F appliquée à une consigne de production S.

**22.** Système configuré pour produire une image (IR), dite image finale, comprenant :

- un dispositif de traitement (10) selon la revendication 21 configuré pour produire une consigne de production améliorée (SA); et
- un dispositif de production (20) configuré pour produire ladite image finale (IR) en utilisant ladite consigne de production améliorée (SA) en tant que consigne de production d'image.

**Patentansprüche**

1. Verarbeitungsverfahren, das dazu bestimmt ist, die Produktion eines Bilds (IR), Endbild genannt, zu ermöglichen, das eine Nebeneinanderanordnung von Bildelementen (2) in einem eine Dicke habenden Substrat (1) aufweist, und ein Bild in der Dicke derart produziert, dass ein Schattierungseffekt jedes Bildelements (2) auf seinen benachbarten Bildelementen eintritt,

   wobei das Verfahren einen Schritt der Bestimmung, ausgehend von einem objektives Bild (IO) genannten Zielbild, einer verbesserten Produktionsanweisung (SA) enthält, die am Eingang von einer Bildproduktionsvorrichtung (20) verwendet werden kann, um das Endbild (IR) zu produzieren;
   wobei der Bestimmungsschritt die folgenden Schritte enthält:

   - Modellierung der Bildproduktionsvorrichtung durch eine Übertragungsfunktion F, die eine Vielzahl von Produktionsanweisungen S in ein entsprechendes vorhergesagtes Bild (IP) umwandelt, und
   - Bestimmung, durch Invertieren der Übertragungsfunktion F, der verbesserten Produktionsanweisung (SA), die am Eingang von der Produktionsvorrichtung verwendet werden kann, um das Endbild (IR) zu produzieren, um den Schattierungseffekt im Endbild (IR) zumindest teilweise zu korrigieren,

   wobei der Bestimmungsschritt eine automatische iterative Berechnung enthält, die einen Farbabstand zwischen dem objektiven Bild (IO) und einem von der an eine Produktionsanweisung S angewendeten Übertragungsfunktion F vorhergesagten Bild (IP) minimiert.

2. Verfahren nach Anspruch 1, wobei, im Bestimmungsschritt, die verbesserte Produktionsanweisung SA so gewählt wird, dass das entsprechende vorhergesagte Bild (IP) dem objektiven Bild (IO) so nahe wie möglich ist, um den Schattierungseffekt im Endbild (IR) zu minimieren.

3. Verfahren nach Anspruch 1 oder 2, wobei die Dicke des Substrats (1) des Bilds mindestens gleich dem n-Fachen der Querabmessung eines Bildelements (2) ist, wobei gilt n = 1,5.

4. Verfahren nach einem der Ansprüche 1 bis 3, wobei die Bildproduktionsvorrichtung eine Lasergravurvorrichtung ist, die ein transparentes Substrat (1) in seiner Dicke schwärzen kann, und wobei eine Produktionsanweisung S eine Laserschusskarte ist.

5. Verfahren nach einem der Ansprüche 1 bis 3, wobei die Bildproduktionsvorrichtung eine Mikroperforationsvorrichtung ist, die Mikrolöcher in der Dicke eines transparenten Substrats herstellen kann, und wobei eine Produktionsanweisung S eine Perforationskarte ist.

6. Verfahren nach einem der Ansprüche 1 bis 5, wobei die Modellierung der Bildproduktionsvorrichtung eine Transmission T der Produktionsanweisung S als Zwischenergebnis bestimmt.

7. Verfahren nach einem der Ansprüche 1 bis 6, wobei die Übertragungsfunktion F eine erste Transmissionsfunktion F1, die einen Produktionsanweisung S in eine Transmission T, T = F1(S) umwandelt, eine zweite Reflexionsfunktion F2, die eine Transmission T in eine Reflexion R umwandelt, R = F2(T), und eine dritte Bildfunktion F3 kombiniert, die eine Reflexion R in ein vorhergesagtes Bild IP umwandelt, IP = F3(R), d.h. IP = F(S) = F3(F2 (F1(S))).

8. Verfahren nach Anspruch 7, wobei die erste Funktion F1 durch eine parametrische Form definiert wird, und die Parameter durch Kalibrierung bestimmt werden.

9. Verfahren nach einem der Ansprüche 7 oder 8, wobei die erste Funktion F1 empirisch bestimmt und tabelliert wird.

10. Verfahren nach einem der Ansprüche 7 bis 9, wobei die zweite Funktion F2 durch die folgende Formel angegeben wird:

$$R = F2(T) = \frac{b.k_1.T^2}{1-k_2.T^2} + \frac{(1-b).k_1.(T*M).T}{1-k_2.(T^2*M)},$$

mit

R eine Reflexionsmatrix,
be [0,1] ein skalarer Parameter,
$k_1, k_2 \in [0,1]$ zwei optische Konstanten,
T eine Transmissionsmatrix,
* der Faltungsoperator und
M ein Faltungskern.

**11.** Verfahren nach Anspruch 10, wobei die zweite Funktion F2 außerdem ein Rauschen K umfasst, gemäß der Formel:

$$R = F2(T) = \left( \frac{b.k_1.T^2}{1-k_2.T^2} + \frac{(1-b).k_1.(T*M).T}{1-k_2.(T^2*M)} \right) * K \text{,}$$

mit

* der Faltungsoperator und
K ein Faltungskern.

**12.** Verfahren nach Anspruch 11, wobei K ein zweidimensionaler Gaußscher Kern mit Standardabweichung $\sigma$ ist.

**13.** Verfahren nach einem der Ansprüche 10 bis 12, wobei $k_1=(1-r_s).r_8.(1-r_i)$ und $k_2=r_8.r_i$, mit $r_s$ dem Spiegelreflexionsindex der Luft-Bild-Schnittstelle, $r_i$ dem inneren Fresnel-Reflexionsindex der Luft-Bild-Schnittstelle und $r_8$ dem intrinsischen Reflexionsindex eines reflektierenden Lambertschen Substrats.

**14.** Verfahren nach einem der Ansprüche 10 bis 13, wobei der Faltungskern M eine quadratische Einheitsmatrix mit Abmessungen dxd, normiert, $M = [1/d^2]_{dxd}$ ist.

**15.** Verfahren nach einem der Ansprüche 7 bis 14, wobei die dritte Funktion F3 die Identitätsfunktion ist.

**16.** Verfahren nach einem der Ansprüche 7 bis 15, wobei die Übertragungsfunktion F kalibriert wird, indem die Parameter b, d und die Standardabweichung $\sigma$ durch Lösung der folgenden Gleichung identifiziert werden:

$$b, d, \sigma = arg\,min \sum_p \Delta\left(IR_p, IP_p\right) = arg\,min \sum_p \Delta\left(IR_p, F(S_p)\right)$$
$$\begin{array}{ll} b \in [0,1] & b \in [0,1] \\ d > 0 & d < 0 \\ \sigma \geq 0 & \sigma \geq 0 \end{array}$$

mit

S eine Produktionsanweisung,
IR ein Endbild erhalten mittels der Produktionsvorrichtung unter Verwendung des Produktionsanweisung S,
IP ein durch die Übertragungsfunktion F ausgehend von der Produktionsanweisung S vorhergesagtes Bild, d.h. IP = F(S),
p ein die Pixel durchlaufender Index,
F die Übertragungsfunktion und
$\Delta$ ein Farbabstand zwischen zwei Pixeln.

**17.** Verfahren nach Anspruch 16, wobei die Auflösung von Kalibrierungspaaren versorgt wird, die eine Produktionsanweisung S und ein Endbild (IR) enthalten, mittels der Produktionsvorrichtung unter Verwendung der Produktionsanweisung S.

**18.** Verfahren nach einem der Ansprüche 1 bis 17, wobei der Bestimmungsschritt einer verbesserten Produktionsanweisung SA die Lösung der folgenden Gleichung enthält:

$$SA = a\,rg\,min_{\hat{S}} \sum_{p} \left(\Delta\left(IO_p, IP_p\right)\right)^2 = a\,rg\,min_{\hat{S}} \sum_{p} \left(\Delta\left(IO_p, F(S_p)\right)\right)^2$$

mit

S eine Produktionsanweisung,
IO ein objektives Bild,
IP ein durch die Übertragungsfunktion ausgehend von der Produktionsanweisung S vorhergesagtes Bild, d.h.
IP = F(S),
p ein die Pixel durchlaufender Index,
F die Übertragungsfunktion und
$\Delta$ ein Farbabstand zwischen zwei Pixeln.

19. Verfahren nach Anspruch 4 wobei, im Bestimmungsschritt, die verbesserte Produktionsanweisung SA bestimmt wird, um auch zumindest zum Teil den Diffusionseffekt des Lasers zu korrigieren, der sich aus der Interaktion Laser-Werkstoff im Material eines Substrats ergeben kann.

20. Verfahren zur Produktion eines Bilds (IR), Endbild genannt, das die folgenden Schritte enthält:

- Bestimmung (S2, S4), durch eine Verarbeitungsvorrichtung (10), einer verbesserten Produktionsanweisung (SA) nach einem der Ansprüche 1 bis 19; und
- Produktion, durch eine Bildproduktionsvorrichtung (20), des Endbilds (IR) unter Verwendung der verbesserten Produktionsanweisung (SA) als Bildproduktionsanweisung.

21. Verarbeitungsvorrichtung (10), die konfiguriert ist, die Produktion eines Bilds (IR), Endbild genannt, zu ermöglichen, das eine Nebeneinanderanordnung von Bildelementen (2) in einem eine Dicke habenden Substrat (1) aufweist, und ein Bild in der Dicke derart produziert, dass ein Schattierungseffekt jedes Bildelements (2) auf seinen benachbarten Bildelementen eintritt, wobei die Verarbeitungsvorrichtung enthält:

- eine Erfassungseinheit (U2) eines Zielbilds, objektives Bild (IO) genannt, und
- eine Bestimmungseinheit (U4), die konfiguriert ist, ausgehend vom objektiven Bild (IO) eine verbesserte Produktionsanweisung (SA) zu bestimmen, die am Eingang von einer Bildproduktionsvorrichtung (20) verwendet werden kann, um das Endbild (IR) zu produzieren, wobei die Bestimmungseinheit konfiguriert ist, um:

- die Bildproduktionsvorrichtung zu modellieren, indem eine Modellierung durch eine Übertragungsfunktion F durchgeführt wird, die eine Vielzahl von Produktionsanweisungen S in ein entsprechendes vorhergesagtes Bild (IP) umwandelt, und
- durch Invertieren der Übertragungsfunktion F die verbesserte Produktionsanweisung (SA) zu bestimmen, die am Eingang von der Produktionsvorrichtung verwendet werden kann, um das Endbild (IR) zu produzieren, um den Schattierungseffekt im Endbild (IR) zumindest teilweise zu korrigieren;

wobei die Bestimmungseinheit konfiguriert ist, die verbesserte Produktionsanweisung SA durch eine automatische iterative Berechnung zu bestimmen, die einen Farbabstand zwischen dem objektiven Bild (IO) und einem von der an eine Produktionsanweisung S angewendeten Übertragungsfunktion F vorhergesagten Bild (IP) minimiert.

22. System, das konfiguriert ist, ein Bild (IR) zu produzieren, Endbild genannt, das enthält:

- eine Verarbeitungsvorrichtung (10) nach Anspruch 21, die konfiguriert ist, eine verbesserte Produktionsanweisung (SA) zu produzieren; und
- eine Produktionsvorrichtung (20), die konfiguriert ist, das Endbild (IR) unter Verwendung der verbesserten Produktionsanweisung (SA) als Bildproduktionsanweisung zu produzieren.

**Claims**

1. Processing method intended to make it possible to produce an image (IR), referred to as the final image, comprising a juxtaposition of image elements (2) in a substrate (1) having a thickness and producing a thickness image such that a shadow effect of each image element (2) is produced on its neighbouring image elements,

   said method comprising a step of determining, on the basis of a target image referred to as the objective image (IO), an improved production setpoint (SA) which can be used as input by an image production device (20) to produce said final image (IR);
   where the determining step comprises the following steps:

   - modelling the image production device with a transfer function F transforming a plurality of production setpoints S into a corresponding predicted image (IP), and
   - determining, by inverting the transfer function F, the improved production setpoint (SA) which can be used as input by the production device to produce said final image (IR), so as to at least partially correct the shadow effect in the final image (IR),

   in which said determining step comprises an automatic iterative computation minimizing a colorimetric distance between the objective image (IO) and an image (IP) predicted by the transfer function F applied to a production setpoint S.

2. Method according to Claim 1, in which, during the determining step, the improved production setpoint SA is chosen so that the corresponding predicted image (IP) is as close as possible to the objective image (IO) in order to minimize the shadow effect in the final image (IR).

3. Method according to Claim 1 or 2, in which the thickness of the substrate (1) of the image is at least equal to n times the transverse dimension of an image element (2), wherein n = 1.5.

4. Method according to any one of Claims 1 to 3, where the image production device is a laser engraving device which can darken a transparent substrate (1) in its thickness and where a production setpoint S is a laser shot map.

5. Method according to any one of Claims 1 to 3, where the image production device is a microperforation device which can produce microholes in the thickness of a transparent substrate and where a production setpoint S is a perforation map.

6. Method according to any one of Claims 1 to 5, where modelling the image production device determines a transmittance T of the production setpoint S as an intermediate result.

7. Method according to any one of Claims 1 to 6, where the transfer function F combines a first, transmittance function F1 transforming a production setpoint S into a transmittance T, T = F1(S), a second, reflectance function F2 transforming a transmittance T into a reflectance R, R = F2(T), and a third, image function F3 transforming a reflectance R into a predicted image IP, IP = F3(R), or IP = F(S) = F3(F2(F1(S))).

8. Method according to Claim 7, where the first function F1 is defined by a parametric form, and the parameters are determined by calibration.

9. Method according to either one of Claims 7 and 8, where the first function F1 is determined empirically, and tabulated.

10. Method according to any one of Claims 7 to 9, where the second function F2 is given by the following formula:

$$R = F2(T) = \frac{b.k_1.T^2}{1-k_2.T^2} + \frac{(1-b).k_1.(T*M).T}{1-k_2.(T^2*M)},$$

with

$R$ being a reflectance matrix,
$b \in [0,1]$ a scalar parameter,

$k_1$, $k_2 \in$ **[0,1]** two optical constants,
T a transmittance matrix,
* the convolution operator and
M a convolution kernel.

11. Method according to Claim 10, where the second function F2 additionally includes noise K, according to the formula:

$$R = F2(T) = \left( \frac{b.k_1.T^2}{1-k_2.T^2} + \frac{(1-b).k_1.(T*M).T}{1-k_2.(T^2*M)} \right) * K \, ,$$

with

* being the convolution operator and
K a convolution kernel.

12. Method according to Claim 11, where **K** is a Gaussian two-dimensional kernel of standard deviation $\sigma$.

13. Method according to any one of Claims 10 to 12, where $k_1$ = (1 - $r_s$).$r_g$.(1 - $r_i$) and $k_2$ = $r_g$.$r_i$, with $r_s$ being the specular reflection index of the air-image interface, $r_i$ the Fresnel internal reflectance index of the air-image interface and $r_g$ the intrinsic reflectance index of a Lambertian reflective substrate.

14. Method according to any one of Claims 10 to 13, where the convolution kernel M is a normalized square identity matrix of dimensions dxd, M = [1/d$^2$]$_{dxd}$.

15. Method according to any one of Claims 7 to 14, where the third function F3 is the identity function.

16. Method according to any one of Claims 7 to 15, where the transfer function F is calibrated by identifying the parameters b, d and the standard deviation $\sigma$, by solving the following equation:

$$b, d, \sigma = \underset{\substack{b\in[0,1]\\ d>0 \\ \hat{\sigma}\geq 0}}{arg \ min} \sum_p \Delta\left(IR_p, IP_p\right) = \underset{\substack{b\in[0,1]\\ d>0 \\ \hat{\sigma}\geq 0}}{arg \ min} \sum_p \Delta\left(IR_p, F(S_p)\right),$$

with

S being a production setpoint,
IR a final image obtained by means of the production device using the production setpoint S,
IP an image predicted by the transfer function F on the basis of the production setpoint S, or IP = F(S),
p an index ranging over the pixels,
F the transfer function and
$\Delta$ a colorimetric distance between two pixels.

17. Method according to Claim 16, where the solution is fed by calibration pairs comprising a production setpoint S and a final image (IR) by means of the production device using the production setpoint S.

18. Method according to any one of Claims 1 to 17, where the step of determining an improved production setpoint SA comprises solving the following equation:

$$SA = \underset{\hat{S}}{arg \ min} \sum_p (\Delta\left(IO_p, IP_p\right))^2 = \underset{\hat{S}}{arg \ min} \sum_p (\Delta\left(IO_p, F(S_p)\right))^2 \, ,$$

with

S being a production setpoint,
IO an objective image,

IP an image predicted by the transfer function on the basis of the production setpoint S, or IP = F(S),
p an index ranging over the pixels,
F the transfer function and
$\Delta$ a colorimetric distance between two pixels.

19. Method according to Claim 4, in which, during the determining step, the improved production setpoint SA is determined in order to also at least partially correct the effect of scattering of the laser which may result from the laser-matter interaction in the material of a substrate.

20. Method for producing an image (IR), referred to as the final image, comprising the following steps:

    - a processing device (10) determining (S2, S4) an improved production setpoint (SA) according to any one of Claims 1 to 19; and
    - an image production device (20) producing said final image (IR) by using said improved production setpoint (SA) as an image production setpoint.

21. Processing device (10) configured to make it possible to produce an image (IR), referred to as the final image, comprising a juxtaposition of image elements (2) in a substrate (1) having a thickness and producing a thickness image such that a shadow effect of each image element (2) is produced on its neighbouring image elements, said processing device comprising:

    - a unit (U2) for acquiring a target image referred to as the objective image (IO), and
    - a determining unit (U4) configured to determine, on the basis of the objective image (IO), an improved production setpoint (SA) which can be used as input by an image production device (20) to produce said final image (IR), where the determining unit is configured to:
    - model the image production device by producing a model using a transfer function F transforming a plurality of production setpoints S into a corresponding predicted image (IP), and
    - determine, by inverting the transfer function F, the improved production setpoint (SA) which can be used as input by the production device to produce said final image (SR), so as to at least partially correct the shadow effect in the final image (IR);

    in which the determining unit is configured to determine the improved production setpoint SA with an automatic iterative computation minimizing a colorimetric distance between the objective image (IO) and an image (IP) predicted by the transfer function F applied to a production setpoint S.

22. System configured to produce an image (IR), referred to as the final image, comprising:

    - a processing device (10) according to Claim 21, configured to produce an improved production setpoint (SA); and
    - a production device (20) configured to produce said final image (IR) by using said improved production setpoint (SA) as an image production setpoint.

FIG.1

FIG.2

FIG.3

FIG.4

FIG.5

| Consigne | → | Interaction laser- matière | → | Résultat |
|---|---|---|---|---|

Forme du spot laser selon la consigne

Impulsion en entrée

Forme du spot laser effectivement réalisé

Profil du laser se diffusant dans le matériau du substrat

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XINWEI CHEN et al.** *3D printing robot: model optimization and image compensation,* 01 Juillet 2012